# EUROPEAN PATENT SPECIFICATION

(11) **EP 1 539 890 B1**
(45) Date of publication and mention of the grant of the patent: **06.05.2009**
(21) Application number: 03790826.6
(22) Date of filing: 29.07.2003
(51) Int. Cl.: C09D 7/12

(54) **LACQUER FORMULATIONS**
LACKE
FORMULATIONS DE LAQUES

(30) Priority: 28.08.2002 DE 10239425
(43) Date of publication of application: 15.06.2005
(73) Proprietor: Evonik Degussa GmbH, 45128 Essen (DE)
(72) Inventor: FRAHN, Stephanie, 63773 Goldbach (DE); ETTLINGER, Manfred, 63791 Karlstein (DE); MEYER, Jürgen, 63811 Stockstadt (DE); LADWIG, Thorsten, 63512 Hainburg (DE)
(86) International application number: PCT/EP2003/008330
(87) International publication number: WO 2004/020536

(56) References cited:
- EP-A- 0 798 349
- DE-A- 3 740 139
- US-A- 5 833 967
- US-A- 5 959 005
- US-A- 6 020 419
- US-A- 2002 077 388
- US-B- 6 193 795

## Description

The invention relates to lacquer formulations.

Lacquer formulations are used for sealing or coating surfaces. In the case of special surfaces such as, for example, surfaces of parquet floors or other floors, or motor vehicle bodies, special scratch resistance is desired.

The document EP 0 798 349 describes a coating agent for applying a protective coat and an impregnation both onto smooth and porous bases selected from brickwall, natural and ortificial stone, consisting of an active substance component, which can contain pyrogenic silica, a liquid vehicle component and of one or more usual additives, whereby the additive can be precipitated silica.

The document US 5,833,967 describes a method of inforcing Keratin substances using colloidal silicic acid, which can be a pyrogenic silica.

The document DE 37 40 139 describes a basic lacquer which contains pyrogenic silica as thixotropic agent.

DE 198 11 790 A1, corresponding to US.A.6 020 419 describes improving the scratch resistance of transparent lacquer binders by the use of pyrogenic hydrophilic and/or hydrophobic silicas. In that case, the silica is incorporated into the binder using a special process.

It is a disadvantage that, with the known silicas, despite the use of a special dispersing device, the rheology of the lacquer system is affected to a very great extent and highly flawed lacquer surfaces are obtained (orange-peel effect).

The invention provides lacquer formulations containing
- from 5 to 99.5 wt.%, preferably from 20 to 80 wt.%, particularly preferably from 35 to 70 wt.%, of solids of a polymer component or of a mixture of two or more physically or chemically crosslinking polymer components (binder components and hardener components),
- from 0 to 80 wt.%, preferably from 20 to 70 wt.%, particularly preferably from 30 to 55 wt.%, of a low molecular weight component acting as solvent or of a mixture of the low molecular weight components,
- from 0.5 to 50 wt.%, preferably from 1 to 25 wt.%, particularly preferably from 2 to 10 wt.%, of a silanised, structurally modified pyrogenic silica to the surface of which there are attached alkylsilyl groups (SiCₙH₂ₙ₊₁, where n = from 2 to 18), preferably octylsilyl and/or hexadecylsilyl groups, and or dimethylsilyl and/or monomethylsilyl groups, preferably dimethylsilyl groups,
- from 0 to 10 wt.% of commercially available additives. Which have a positive effect on the properties of a lacquer, such as, the rheological behaviour of the liquid system, stabilisation and dispersibility of fillers and pigments, appearance and flow of the lacquer surface.

As binders there may be used the resins conventional in lacquers and coatings technology, as are described, for example, in Lackharze, Chemie, Eigenschaften und Anwendungen, Eds. D. Stoye, W. Freitag, Hanser Verlag, Munich, Vienna 1996. Examples which may be mentioned include, *inter alia*, polymers and copolymers of (meth)acrylic acid and their esters, optionally carrying further functional groups, with further olefinically unsaturated compounds, such as, for example, styrene; also polyether, polyester, polycarbonate, polyurethane and epoxy resins, as well as any desired mixtures of those polymers.

As polymeric organic compounds there are preferably used polymers carrying hydroxyl groups, for example polyacrylate, polyester, polycaprolactone, polyether, polycarbonate and polyurethane polyols and hydroxyfunctional epoxy resins, as well as any desired mixtures of those polymers. As particularly preferred polymeric organic compounds there are used aqueous or solvent-containing or solvent-free polyacrylate and polyester polyols, as well as any desired mixtures thereof. Suitable polyacrylate polyols are copolymers of hydroxyl-group-containing monomers with other olefinically unsaturated monomers, such as, for example, esters of (meth)acrylic acid, styrene, α-methylstyrene, vinyltoluene, vinyl esters, maleic and fumaric acid mono- and di-alkyl esters, α-olefins and other unsaturated oligomers and polymers.

Particularly suitable polyacrylate polyols have an average weight-average molecular weight, which can be determined by means of gel permeation chromatography (standard polystyrene), of from 2000 to 10,000 g/mol., preferably from 2500 to 50,000 g/mol. and particularly preferably from 3100 to 40,000 g/mol., a glass transition temperature TG of from -50°C to +100°C, preferably from -40°C to +90°C and particularly preferably -30°C (to +80°C), an acid number of < 30 mg KOH/g, preferably < 25 mg KOH/g, and a hydroxyl group content of from 0.5 to 14.0 wt.%, preferably from 0.5 to 10.0 wt.% and particularly preferably from 1.0 to 8.0 wt.%, and consist of
a) from 0 to 70 parts by weight, preferably from 5 to 70 parts by weight, of at least one unsaturated, aromatic monomer, such as styrene, methylstyrene or vinyltoluene,
b) from 0 to 70 parts by weight, preferably from 5 to 70 parts by weight, of at least one (cyclo)aliphatic ester of acrylic and/or methacrylic acid having from 1 to 18 carbon atoms in the (cyclo)alkyl radical,
c) from 4 to 95 parts by weight, preferably from 10 to 60 parts by weight, of at least one hydroxyalkyl ester of acrylic and/or methacrylic acid having from 2 to 4 carbon atoms in the hydroxyalkyl radical, and/or addition products of monoepoxides with acrylic and/or methacrylic acid,
d) from 0 to 10 parts by weight, preferably from 0.1 to 5 parts by weight, of at least one monoolefinically unsaturated mono- or di-carboxylic acid having from 3 to 7 carbon atoms, and/or at least one maleic acid or fumaric acid semi-ester having from 1 to 14 carbon atoms in the alcohol radical, and
e) from 0 to 30 parts by weight, preferably from 0 to 20 parts by weight, of further copolymerisable, olefinically (also polyolefinically) unsaturated monomeric and/or polymeric compounds.

The described hydroxyl-functional polyols can be used in both one-component and two-component lacquer systems together with the hardeners conventional in lacquers and coatings technology. There come into consideration as hardeners therefor, for example, polyisocyanates or polyisocyanates blocked with cleaving agents such as methyl ethyl ketoxime, caprolactam, malonic acid esters, triazole or 2,5-dimethylpyrazole, or (partially) etherified melamine-formaldehyde resins, as are described, for example, in Lackharze, Chemie, Eigenschaften und Anwendungen, Eds. D. Stoye, W. Freitag, Hanser Verlag, Munich, Vienna 1996.

Preference is given to the use of the aqueous or solvent-containing binders according to the invention in two-component systems together with polyisocyanates based on hexamethylene diisocyanate, isophorone diisocyanate, 4,4-diisocyanatodicyclohexylmethane, tetramethylene diisocyanate, 2-methylpentamethylene diisocyanate, 2,2,4-and 2,4,4-trimethylhexamethylene diisocyanate (THDI), 1,4-diisocyanato-cyclohexane, 3-isocyanatomethyl-1-methyl-1-isocyanatocyclohexane (IMCI), a,a,a',a'-tetramethyl-m- or -p-xylylene diisocyanate (TMXDI), 1,4- and 1,3-xylylene diisocyanate (XDI), hexahydroxylylene diisocyanate (H6-XDI) and/or mixtures thereof and optionally their variants rendered hydrophilic for aqueous binders, as are described, for example, in DE-A 41 36 618.

Particular preference is given, however, to polyisocyanates based on hexamethylene diisocyanate, isophorone diisocyanate and 4,4-diisocyanatodicyclohexylmethane.

Such polyisocyanates are used as hardeners in high-quality polyurethane lacquers which have outstanding resistance to chemicals and a high degree of gloss.

The conventional solvents are such as aromatic, aliphatic, araliphatic or cycloaliphatic hydrocarbons, partially or completely halogenated aromatic, aliphatic, araliphatic or cycloaliphatic hydrocarbons, alcohols, such as, for example, methanol, ethanol, isopropanol, butanol, benzyl alcohol, diacetone alcohol, esters, such as, for example, ethyl acetate, propyl acetate, butyl acetate, ether esters, such as, for example, methoxypropyl acetate or butyl glycol acetate, ketones, such as acetone, methyl ethyl ketone, methyl isobutyl ketone or cyclohexanone, strongly polar solvents, such as, for example, N,N-dimethylformamide, N,N-dimethylacetamide, dimethyl sulfoxite, N-methylpyrrolidone; further solvents are water, liquid acid esters, such as, for example, phosphoric acid dibutyl ester, phosphoric acid tributyl ester, sulfonic acid esters, borates or derivatives of silica, for example tetraethoxysilane, methyltrimethoxysilane, 3-aminopropyltrimethoxysilane, 3-aminopropyltriethoxysilane, glycidyloxypropyltrimethoxysilane, glycidyloxypropyltriethoxysilane.

If those solvents are used as dispersing media for the silicas according to the invention, further substances may be added to those materials that are used. Preference is given to those substances which are also provided for subsequent further use or which improve the deagglomeration or the properties, for example the stability, of the deagglomerated materials.

Particular preference is given to oligomeric or polymeric organic compounds, such as, for example, the above-mentioned resins and binders conventional in lacquers and coatings technology.

It is also possible to use in the dispersing medium amounts of the combination resins used in multi-component systems, such as, for example, the amine and melamine resins acting as hardeners, polyisocyanates, the adducts, referred to as blocked polyisocyanates, consisting of aromatic or aliphatic polyisocyanates and so-called cleaving agents, such as methyl ethyl ketoxime, caprolactam, malonic acid esters or triazole and 2,5-dimethylpyrazole. For procedures in which water is used as a substantial constituent of the dispersing medium, suitable additives are especially compounds which are soluble in or compatible with water, such as, for example, partially or completely saponified polyvinyl acetate, or variants of the above-mentioned classes of compounds which have been rendered hydrophilic. Further additives which are suitable and which are preferably used in aqueous media are, for example, silica sol and the sols of metallic oxides of the elements aluminium, titanium, zirconium, tantalum and tin.

As low molecular weight additives by means of which it is possible, for example, to achieve stabilisation of the deagglomerated silicas according to the invention against further agglomeration, there are suitable in principle all compounds which are used for stabilising nanoscale materials prepared by other means, for example by one of the methods mentioned above. Mention may be made of, for example, hydrolysable compounds carrying silane groups, such as alkoxysilanes or chlorosilanes. Particular amphiphilic compounds may also be used. The solvents and additives that are suitable for the preparation of the dispersing medium can be mixed with one another as desired.

The lacquer binders according to the invention can be mixed with any conventional hardeners (combinations) to produce coatings.

The lacquer formulations according to the invention are transparent lacquer formulations containing pyrogenic, structurally modified silicas, the silicas according to the invention having an extremely small effect on the rheology of the lacquer formulation while at the same time exhibiting increased resistance of the lacquer surface to scratching.

The lacquer formulations according to the invention are particularly suitable for the production of clear lacquers, because significant improvements in the properties, such as an improvement in scratch resistance, can be achieved thereby while transparency and a high degree of gloss are retained. Typical clear lacquer applications in which the lacquer formulations according to the invention lead to particularly marked advantages are, for example, the series and repair lacquering of motor vehicles, and the wear-resistant coating of parquet floors and other floors.

In addition, owing to the structural modification, the pyrogenic silicas have a reduced tendency to dust formation, and incorporation into the lacquer binders is simplified.

The following two tables contain an overview of the production and the physicochemical data of the comparison silicas and the silicas according to the invention used in the Examples.

**Table 1: Overview of the preparation of the comparison silicas and of the silicas according to the invention (Examples)**

| **Description** | **Group attached to the surface** | **Structural modification** | **Milling after structural modification** |
|---|---|---|---|
| Comparison silica 1 | Hexadecylsilyl | No | - |
| Comparison silica 2 | Octylsilyl | No | - |
| Comparison silica 3 | Dimethylsilyl | No | - |
| Comparison silica 4 | Dimethylsilyl | No | - |
| Silica 1 | Hexadecylsilyl | Yes | Yes |
| Silica 2 | Hexadecylsilyl | Yes | No |
| Silica 3 | Octylsilyl | Yes | Yes |
| Silica 4 | Octylsilyl | Yes | No |
| Silica 5 | Dimethylsilyl | Yes | No |
| Silica 6 | Dimethylsilyl | Yes | No |
| Silica 7 | Dimethylsilyl | Yes | No |
| Silica 8 | Dimethylsilyl | Yes | No |

**Table 2: Physicochemical data of the comparison silicas and of the silicas according to the invention (Examples)**

| Description | Tamped density [g/l] | Loss on drying [%] | Ignition loss[%] | pH value | C content [%] | DBP adsorption [%] | Specific BET surface area [m²/g] |
|---|---|---|---|---|---|---|---|
| Comparison silica 1 | 57 | 0.5 | 1.8 | 4.6 | 1.2 | 302 | 195 |
| Comparison silica 2 | 51 | 0.6 | 6.8 | 5.3 | 5.4 | 236 | 175 |
| Comparison silica 3 | 64 | 0.1 | 0.5 | 4.0 | 0.8 | 243 | 113 |
| Comparison silica 4 | 67 | 0.5 | 0.6 | 4.8 | 1.0 | 256 | 165 |
| Silica 1 | 123 | 0.7 | 2.6 | 6.0 | 1.4 | 208 | 197 |
| Silica 2 | 146 | 1.1 | 2.3 | 5.8 | 1.4 | 192 | 195 |
| Silica 3 | 240 | 0.8 | 6.7 | 4.8 | 5.3 | 87 | 169 |
| Silica 4 | 322 | 0.3 | 6.9 | 6.0 | 5.3 | not determinable | 172 |
| Silica 5 | 236 | 0.1 | 0.6 | 4.0 | 0.8 | 127 | 115 |
| Silica 6 | 204 | 0.1 | 0.6 | 3.9 | 0.8 | 137 | 116 |
| Silica 7 | 223 | 0.3 | 0.7 | 4.2 | 1.0 | 160 | 169 |
| Silica 8 | 186 | 0.3 | 0.7 | 4.2 | 1.1 | 152 | 171 |

### Example 1:

A conventional 2-component polyurethane lacquer was used for investigating the improvement in scratch resistance. The recipe for the lacquer and the preparation, including application, thereof are summarised hereinbelow:

### Recipe 1:

| Material to be ground | Parts by weight |
|---|---|
| Acrylate resin, 50 % in xylene/ethyl benzene 3:1 | 53.3 |
| Butyl acetate 98 % | 6.7 |
| Xylene | 6.7 |
| Silica | 5.0 |
| ∑ | 71.7 |

| Making up into a lacquer | |
|---|---|
| Acrylate resin, 50 % in xylene/ethyl benzene 3:1 | 1.1 |
| Xylene | 12.2 |
| Ethoxypropyl acetate | 1.5 |
| Butyl glycol acetate | 1.5 |
| Butyl acetate 98 % | - |
| Aliphatic polyisocyanate, 75 % in 1-methoxypropyl acetate-2/xylene 1:1 | 17.0 |
| ∑ | 105.0 |

| | |
|---|---|
| Binder concentration: | 40 % |
| Silica calculated on material | |
| to be ground (FK): | 18.8 % |
| Silica calculated on lacquer (total) : | 5.0 % |
| Silica calculated on lacquer (FK): | 12.5 % |

### Preparation and application of the lacquers

The binder is mixed with the solvents. For preliminary dispersion, the silica is then incorporated into that mixture using a dissolver (plate ∅ 45 mm) and predispersed for 5 minutes at 2000 rpm. The mixture is dispersed in a laboratory bead mill for 30 minutes at 2500 rpm and 60 % pump capacity using glass beads (∅ 1 mm). The dispersed material is checked using a grindometer, 25 µm, according to DIN ISO 1524. It must be smaller than 10 µm.

The ground material is made up into a lacquer according to the recipe, the components being mixed by means of a blade-type stirrer at 2000 rpm. The hardener is incorporated in the same manner.

After adjusting the lacquers to spraying viscosity according to DIN 53411, the lacquers are applied by means of spray application to black-lacquered metal sheets, e.g. DT 36 (Q-Panel) (layer thickness about 40-50 µm). After spraying, the metal sheets are dried for 24 hours at room temperature and then for 2 hours in a drying oven at 70°C.

### Scratching tests:

By means of a scouring- and washing-resistance testing machine (Erichsen, pig-bristle brush), the metal sheets are scoured using a quartz/water suspension (100 g of water + 1 g of Marlon^{®} A 350, 0.25 % + 5 g of Sikro^{®} F500) and also using a CaCO₃/water mixture (100 g of water + 1 g of Marlon^{®} A 350, 0.25 % + 5 g of Millicarb^{®} BG). The gloss before scouring and 10 minutes after scouring is determined using a reflectometer (angle of irradiation 20°).

Table 3: next page

Because of their substantially lower rheological activity as compared with the comparison silicas, all the silicas according to the invention can be used in high concentrations without impairing the appearance of the lacquer surface. In addition, the silicas according to the invention exhibit a substantial improvement in the scratch resistance of the lacquer surfaces.

**Table 3a: Summary of the relevant lacquer-related properties of the liquid lacquers and of the applied and dried films**

| | **Comparison S1** | **S 1** | **S 2** | **Reference without S** | **Comparison S2** | **S 3** | **S 4** | **Reference without S** |
|---|---|---|---|---|---|---|---|---|
| **Grindometer value [µm]** | < 10 | < 10 | < 10 | < 10 | < 10 | < 10 | < 10 | / |
| **Viscosity (ground material) [mPas]** | | | | | | | | |
| **6 rpm** | 409 | 210 | 220 | / | 5670 | 935 | 832 | / |
| **60 rpm** | 407 | 210 | 212 | / | 1260 | 409 | 407 | / |
| **Viscosity (lacquer+hardener) [mPas]** | | | | | | | | |
| **6 rpm** | 120 | 80 | 80 | 60 | 446 | 195 | 175 | 55 |
| **60 rpm** | 113 | 82 | 82 | 61 | 194 | 146 | 144 | 64 |
| **Flow** | poor fine cracks | o. k. | o. k. | o. k. | orange-peel effect | o. k. | o. k. | o. k. |
| **Scratch resistance** | | | | | | | | |
| **20° reflectometer value before scratching** | 81 | 89.5 | 89.1 | 91.3 | 38 | 85.5 | 85.3 | 91.7 |
| **Haze before scratching** | 101 | 9 | 12 | 2 | 423 | 18 | 19 | 2 |
| **40 strokes with Sikron F 500** | | | | | | | | |
| **residual gloss [%]** | 83.4 | 88.5 | 90.7 | 51.8 | / | 80.4 | 84.3 | 56.1 |

**Table 3b: Summary of the relevant lacquer-related properties of the liquid lacquers and of the applied and dried films**

| | **Comparison S3** | **S 5** | **S 6** | **Reference without S** | **Comparison S4** | **S 7** | **S 8** | **Reference without S** |
|---|---|---|---|---|---|---|---|---|
| **Grindometer value [µm]** | < 10 | < 10 | < 10 | / | < 10 | < 10 | < 10 | / |
| **Viscosity (ground material) [mPas]** | | | | | | | | |
| **6 rpm** | 4710 | 421 | 772 | 571 | 4990 | 802 | 772 | 55 |
| **60 rpm** | 1120 | 210 | 264 | 225 | 1200 | 279 | 264 | 52 |
| **Viscosity (lacquer+hardener) [mPas]** | | | | | | | | |
| **6 rpm** | 882 | 105 | 210 | 135 | 857 | 235 | 105 | 70 |
| **60 rpm** | 239 | 75 | 92 | 79 | 242 | 100 | 26 | 37 |
| **Flow** | orange-peel effect | o. k. | o. k. | o. k. | orange-peel effect | o. k. | o. k. | o. k. |
| **Scratch resistance** | | | | | | | | |
| **20° reflectometer value before scratching** | 39.0 | 83.4 | 83.5 | 88.8 | 67.2 | 84.2 | 82.6 | 89.3 |
| **Haze before scratching** | 430 | 30 | 40 | 3 | 235 | 18 | 10 | 2 |
| **40 strokes with Sikron F 500** | / | 83.7 | 82.3 | 56.0 | / | 74.7 | 80.4 | 47.2 |
| **residual gloss** [%] | | | | | | | | |

### Example 2

In this Example, the effect of structural modification has been investigated with reference to a high solids 2K PUR clear lacquer. The recipe for the lacquer and the preparation, including application and testing, thereof are summarised hereinbelow:

### Recipe 2:

| Material to be ground | Parts by weight |
|---|---|
| Acrylic copolymer, modified with synthetic fatty acids, | |
| 70 % in n-butyl acetate | 61.0 |
| Butyl acetate 98 % | 7.3 |
| Methoxypropyl acetate | 1.7 |
| Solvesso^{®} 100 | 2.0 |
| Xylene | 2.0 |
| Baysilon^{®} OL 17, 10 % in xylene (silicone oil) | 0.7 |
| Silica | 5.0 |
| ∑ | 79.7 |

| Making up into a lacquer (hardener) | |
|---|---|
| Aliphatic polyisocyanate, 90 % in n-butyl | |
| acetate | 22.3 |
| Butyl acetate 98 % | 2.0 |
| Solvesso^{®} 100 | 1.0 |
| ∑ | 105.0 |

| | |
|---|---|
| Binder concentration: | 62.8 % |
| Silica calculated on material | |
| to be ground (FK): | 11.7 % |
| Silica calculated on lacquer (total): | 5.0 % |
| Silica calculated on lacquer (FK): | 8.0 % |

### Preparation and application of the lacquers

The binder is mixed with the solvents. For preliminary dispersion, the silica is then incorporated into that mixture using a dissolver (plate ∅ 45 mm) and predispersed for 5 minutes at 2000 rpm. The mixture is dispersed in a laboratory bead mill for 30 minutes at 2500 rpm and 60 % pump capacity using glass beads (∅ 1 mm). The dispersed material is checked using a grindometer, 25 µm, according to DIN ISO 1524. It must be smaller than 10 µm.

The ground material is made up into a lacquer according to the recipe, the components being mixed by means of a blade-type stirrer at 2000 rpm. The hardener is incorporated in the same manner.

After adjusting the lacquers to spraying viscosity according to DIN 53411, the lacquers are applied by means of spray application to black-lacquered metal sheets, e.g. DT 36 (Q-Panel) (layer thickness 40-50 µm). After spraying, the metal sheets are dried for 24 hours at room temperature and then for 2 hours in a drying oven at 70°C.

### Scratching tests:

By means of a scouring- and washing-resistance testing machine (Erichsen, pig-bristle brush), the metal sheets are scoured using a quartz/water suspension (100 g of water + 1 g of Marlon^{®} A 350, 0.25 % + 5 g of Sikron^{®} F500). The gloss before scouring and 10 minutes after scouring is determined using a reflectometer (angle of irradiation 20°).

**Table 4: Summary of the relevant lacquer-related properties of the liquid lacquers and of the applied and dried films**

| | **Comparison S1** | **S 1** | **S 2** | **Reference without S** | **Comparison S4** | **S 7** | **S 8** | **Reference without S** |
|---|---|---|---|---|---|---|---|---|
| **Grindometer value [µm]** | < 10 | < 10 | < 10 | / | < 10 | < 10 | < 10 | / |
| **Viscosity (ground material) [mPas]** | | | | | | | | |
| **6 rpm** | 767 | 376 | 376 | 205 | 6200 | 1500 | 541 | 140 |
| **60 rpm** | 717 | 359 | 361 | 205 | 2100 | 900 | 559 | 195 |
| **Viscosity (lacquer+hardener) [mPas]** | | | | | | | | |
| **6 rpm** | 459 | 279 | 281 | 120 | 3821 | 1041 | 497 | 167 |
| **60 rpm** | 399 | 272 | 274 | 120 | 1320 | 666 | 446 | 195 |
| **Flow** | poor (fine "cracks") | o.k. | o. k. | o. k. | pronounced orange peel | o. k. | o. k. | o. k. |
| **Scratch resistance** | | | | | | | | |
| **20° reflectometer value before scratching value** | 82.3 | 86.5 | 86.3 | 88.2 | 81.0 | 83.5 | 82.8 | 88.0 |
| **Haze before scratching** | 3 | 4 | 4 | 2 | 25 | 5 | 6 | 2 |
| **40 strokes with Sikron F 500** | | | | | | | | |
| **residual gloss [%]** | 63.2 | 78.2 | 75.4 | 30.2 | | 94.3 | 93.4 | 82.0 |

Because of their substantially lower rheological activity as compared with the comparison silicas 1 and 4, the silicas 1 + 2 and 7 + 8 according to the invention can be used in high concentrations without impairing the appearance of the lacquer surface. In addition, the silicas according to the invention exhibit a substantial improvement in the scratch resistance of the lacquer surface.

### Example 3:

A conventional 2-component polyurethane lacquer was used for investigating the improvement in scratch resistance. The recipe for the lacquer and the preparation, including application, thereof are summarised hereinbelow:

### Recipe 3

| Material to be ground | Parts by weight |
|---|---|
| Acrylic copolymer, modified with synthetic fatty acids, 60 % solution | 43.4 |
| Butyl acetate 98 % | 17.8 |
| Xylene | 3.9 |
| Silica | 5.0 |
| ∑ | 70.7 |

| Making up into a lacquer | |
|---|---|
| Xylene | 11.3 |
| Ethoxypropyl acetate | 3.4 |
| Butyl glycol acetate | 1.6 |
| | |
| Aliphatic polyisocyanate, 75 % in 1-methoxypropyl acetate-2/xylene 1:1 | 18.6 |
| ∑ | 105.0 |

| | |
|---|---|
| Binder concentration: | 40 % |
| Silica calcuated on material | |
| to be ground (FK): | 19.2 % |
| Silica calculated on lacquer (total): | 5.0 % |
| Silica calculated on lacquer (FK): | 12.5 % |

### Preparation and application of the lacquers

The binder is mixed with the solvents. For preliminary dispersion, the silica is then incorporated into that mixture using a dissolver (plate ∅ 45 mm) and predispersed for 5 minutes at 2000 rpm. The mixture is dispersed in a laboratory bead mill for 30 minutes at 2500 rpm and 60 % pump capacity using glass beads (∅ 1 mm). The dispersed material is checked using a grindometer, 25 µm, according to DIN ISO 1524. It must be smaller than 10 µm.

The ground material is made up into a lacquer according to the recipe, the components being mixed by means of a blade-type stirrer at 2000 rpm. The hardener is stirred in in the same manner.

After adjusting the lacquers to spraying viscosity according to DIN 53411, the lacquers are applied by means of spray application to black-lacquered metal sheets, e.g. DT 36 (Q-Panel) (layer thickness about 40-50 µm). After spraying, the metal sheets are dried for 24 hours at room temperature and then for 2 hours in a drying oven at 70°C.

### Scratching tests:

By means of a scouring- and washing-resistance testing machine (Erichsen, pig-bristle brush), the metal sheets are scoured using a quartz/water suspension (100 g of water + 1 g of Marlon^{®} A 350, 0.25 % + 5 g of Sikron^{®} F500). The gloss before scouring and 10 minutes after scouring is determined using a reflectometer (angle of irradiation 20°).

Table 5: see next page

Because of their substantially lower rheological activity as compared with the comparison silicas 1 and 2, the silicas 1 + 2 and 3 + 4 according to the invention can be used in high concentrations without impairing the appearance of the lacquer surface. In addition, the silicas according to the invention exhibit a substantial improvement in the scratch resistance of the lacquer surface.

**Table 5: Summary of the relevant lacquer-related properties of the liquid lacquers and of the applied and dried films**

| | **Comparison silica 1** | **Silica 1** | **Silica 2** | **Reference without silica** | | **Comparison silica 2** | **Silica 3** | **Silica 4** | **Reference without silica** |
|---|---|---|---|---|---|---|---|---|---|
| **Grindometer value [µm]** | < 10 | < 10 | < 10 | / | | < 10 | < 10 | < 10 | / |
| **Viscosity (ground material) [mPas]** | | | | | | | | | |
| **6 rpm** | 409 | 210 | 220 | / | | 5670 | 935 | 832 | / |
| **60 rpm** | 407 | 210 | 212 | / | | 1260 | 409 | 407 | / |
| **Viscosity (lacquer+hardener) [mPas]** | | | | | | | | | |
| **6 rpm** | 120 | 80 | 80 | 60 | | 446 | 195 | 175 | 55 |
| **60 rpm** | 113 | 82 | 82 | 61 | | 194 | 146 | 144 | 64 |
| **Flow** | poor fine cracks | o. k. | o. k. | o. k. | | orange-peel effect | o. k. | o. k. | o. k. |
| **Scratch resistance** | | | | | | | | | |
| **20° reflectometer value before scratching** | 81 | 89.5 | 89.1 | 91.3 | | 38 | 85.5 | 85.3 | 91.7 |
| **Haze before scratching** | 101 | 9 | 12 | 2 | | 423 | 18 | 19 | 2 |
| **40 strokes with Sikron F 500** | | | | | | | | | |
| **residual gloss** | 83.4 | 88.5 | 90.7 | 51.8 | | / | 80.4 | 84.3 | 56.1 |

### Example 4

Direct comparison of the silicas according to the invention with a scratch-resistant lacquer according to DE 198 11 790 A1, in which AEROSIL^{®} R 972 is used to improve the scratch resistance.

### Recipe 4

| | **prior art 1)** | **Silicas according to the invention 2)** |
|---|---|---|
| **Material to be ground** | | |
| Desmophen^{®} A 2009/1 | | 190.2 |
| Methoxypropyl acetate : Solvesso^{®} 100 1:1 | | 36.8 |
| Silica | | 23.0 |
| ∑ | | 250.0 |

| **Making up into a lacquer** | | |
|---|---|---|
| Desmophen^{®} A #A YEP4-55A, contains AEROSIL R 972 | 96.0 | - |
| Ground material | - | 48.9 |
| Desmophen^{®} 2009/1 | - | 24.9 |
| OL 17, 10 % in MPA | - | - |
| Modaflow^{®} 1 % in MPA | - | - |
| MPA : Solvesso^{®} 100 1:1 | 11.6 | 33.8 |
| Butyl glycol acetate | 10.5 | 10.5 |
| Byketol^{®} OK | 7.5 | 7.5 |
| Byk^{®} 141 | 0.8 | 0.8 |

| **Addition of hardener** | | |
|---|---|---|
| Desmodur^{®} N 3390 | 23.6 | 23.6 |
| ∑ | 150.0 | 150.0 |

### Preparation and application of the lacquers

1) The comparison silica 1 is incorporated into the binder according to DE 198 11 790 A1 by means of a jet disperser.
2) The binder is mixed with the solvents. For preliminary dispersion, the silica is then incorporated into that mixture using a dissolver (plate ∅ 45 mm) and predispersed for 5 minutes at 2000 rpm. The mixture is dispersed in a laboratory bead mill for 30 minutes at 2500 rpm and 60 % pump capacity using glass beads (∅ 1 mm). The dispersed material is checked using a grindometer, 25 µm, according to DIN ISO 1524. It must be smaller than 10 µm.

The ground material is made up into a lacquer corresponding to 1) or 2) according to the recipe, the components being mixed by means of a blade-type stirrer at 2000 rpm. The hardener is stirred in in the same manner.

After adjusting the lacquers to spraying viscosity according to DIN 53411, the lacquers are applied by means of spray application to black-lacquered metal sheets, e.g. DT 36 (Q-Panel) (layer thickness about 40-50 µm). After spraying, the metal sheets are dried for 24 hours at room temperature and then for 2 hours in a drying oven at 70°C.

### Scratching tests:

By means of a scouring- and washing-resistance testing machine (Erichsen, pig-bristle brush), the metal sheets are scoured using a CaCO₃/water suspension (100 g of water + 1 g of Marlon^{®} A 350, 0.25 % + 5 g of CaCO₃ Millicarb). The gloss before scouring and 10 minutes after scouring is determined using a reflectometer (angle of irradiation 20°).

**Table 6: Summary of the relevant lacquer-related properties of the liquid lacquers and of the applied and dried films**

| | **Prior art** | **Silica 1** | **Silica 5** | **Silica 8** | **Reference without S** |
|---|---|---|---|---|---|
| **Grindometer value [µm] value** | < 10 | | < 10 < 10 | < 10 | / |
| **Viscosity (ground material)** | | | | | |
| **6 rpm** | 58 | 30 | 30 | 26 | 30 |
| **60 rpm** | 48 | 43 | 43 | 33 | 40 |
| **Surface** | orange peel | o.k. | o.k. | o.k. | o.k. |
| **20° reflectometer value before scratching** | 88.0 | 86.5 | 90.2 | 89.6 | 98.5 |
| **100 strokes with Millicarb** | | | | | |
| **residual gloss** | 88.3 | 96.3 | 95.4 | 97.1 | 59.6 |

It is found that, by the use of the silicas according to the invention, a substantially greater improvement in the residual gloss after scratching of the lacquer surface is achieved than in the case of the prior art. In addition, owing to their low rheological activity, the silicas according to the invention do not cause an orange-peel effect.

## Claims

1. Lacquer formulations containing:
• from 5 to 99.5 wt.% of solids of a polymer component or of a mixture of two or more physically or chemically crosslinking polymer components,
• from 0 to 80 wt.% of a low molecular weight component acting as solvent or of a mixture of the low molecular weight components,
• from 0.5 to 50 wt.% of a silanised, structurally modified pyrogenic silica to the surface of which there are attached alkylsilyl groups (SiCₙH₂ₙ₊₁, where n = from 2 to 18) and/or dimethylsilyl groups and/or monomethylsilyl groups,
• from 0 to 10 wt.% of commercially available additives.

## Patentansprüche

1. Lackformulierungen enthaltend:
• 5 bis 99,5 Gew.-% Festkörper einer Polymerkomponente oder eines Gemischs aus zwei oder mehr physikalisch oder chemisch vernetzenden Polymerkomponenten,
• 0 bis 80 Gew.-% einer niedermolekularen als Lösungsmittel fungierenden Komponente oder eines Gemischs dieser niedermolekularen Komponenten,
• 0,5 bis 50 Gew.-% einer silanisierten, strukturmodifizierten, pyrogenen Kieselsäure, die auf der Oberfläche fixierte Alkylsilyl- (SiCₙH₂ₙ₊₁, mit n = 2 bis 18) -Gruppen und/oder Dimethylsilylgruppen und/oder Monomethylsilylgruppen aufweist,
• 0 bis 10 Gew.-% handelsübliche Additive.

## Revendications

1. Formulations de laques contenant :
• de 5 à 99,5% en poids de matières solides d'un composant polymère ou d'un mélange de deux ou plus de deux composants polymères de réticulation physique ou chimique,
• de 0 à 80% en poids d'un composant à faible poids moléculaire agissant en tant que solvant ou d'un mélange des composants à faible poids moléculaire,
• de 0,5 à 50% en poids d'une silice pyrogène silanisée, modifiée du point de vue structural, à la surface de laquelle sont fixés des groupes alkylsilyle (SiCₙH₂ₙ₊₁, où n vaut de 2 à 18) et/ou des groupes diméthylsilyle et/ou des groupes monométhylsilyle,
• de 0 à 10% en poids d'additifs disponibles dans le commerce.
